# EUROPEAN PATENT APPLICATION

(11) **EP 3 797 856 A1**
(43) Date of publication of application: **31.03.2021**
(21) Application number: 20198604.9
(22) Date of filing: 28.09.2020
(51) Int. Cl.: B01D 53/26, F24F 3/14

(54) **MULTI-UNIT ADAPTABLE COMPRESSED AIR DRYING SYSTEM**

(30) Priority: 30.09.2019 US 201916587542
(71) Applicant: Ingersoll-Rand Industrial U.S., Inc., Davidson, NC 28036 (US)
(72) Inventor: MARK, Henry Y., Philadelphia, PA 19119 (US); VEZIL, Stefano, TS 34149 Trieste (IT); BERGH, Charles John, Berwyn, PA 19312 (US)
(74) Representative: Murgitroyd & Company

(57) **Abstract**

A compressed air drying system is provided for removing moisture from compressed air. The drying system is a modular system with multiple drying units arranged parallel to each other. The drying units cool the compressed air and remove moisture from the compressed air. In order to limit the number of drying units used during low demand periods, a separate air valve is included for each drying unit to control the flow of compressed air through the respective drying units.

## Description

### BACKGROUND

The present inventions relate generally to industrial air dryers for compressed air systems.

Compressed air is commonly used in factories to power pneumatic tools and to blow air onto various surfaces for cleaning, expanding bags, moving parts, etc. Typically, factories have a centralized compressed air system installed that feeds a network of compressed air piping that supplies numerous tools or stations with compressed air. Thus, one or more centralized air compressors may be used to supply an entire factory space with compressed air.

However, it is known that air compressors which draw air from the surrounding atmosphere also introduce moisture into the compressed air from the water vapor naturally contained in atmospheric air. Moisture within compressed air used in factories can cause numerous problems. For example, in the case of power tools that use compressed air as a power source, moisture within the supplied compressed air can cause corrosion of the internal components of the tool. In addition, where compressed air is blown onto surfaces, any moisture within the compressed air will also be blown onto the surface along with the blown air. This can be particularly problematic where it is a requirement that the surface remain dry, such as food packaging operations, and can also be a problem with delicate surfaces that might be damaged by water particles within the compressed air.

Due to the problems associated with moisture within compressed air systems, various types of air drying systems may be used in industrial factories to remove moisture contained within compressed air. While such systems are useful and adequately address the potential problems associated with moisture in compressed air, such systems can be expensive to operate and maintain. Thus, it would be desirable to provide improved air drying systems for industrial factories

### SUMMARY

A drying system is described for removing moisture from compressed air. The system includes multiple drying units arranged in parallel between a compressed air supply and a compressed air demand. Each of the drying units includes a main cooler that cools the compressed air and a moisture separator that withdraws moisture from the cooled air. A separate air valve is provided with each drying unit to control compressed air flow through the respective drying unit. The invention may also include any other aspect described below in the written description or in the attached drawings and any combinations thereof.

In this sense the present invention refers to a compressed air drying system according to claim 1. Advantageous embodiments may include features of depending claims.

Thus the compressed air drying system according to the invention comprises a compressed air supply and a compressed air demand. A plurality of drying units is arranged in parallel between the compressed air supply and the compressed air demand with each of the plurality of drying units comprising a precooler/preheater, a main cooler and a moisture separator. The precooler/preheater of each drying unit comprises a drying unit air inlet connected to the compressed air supply, a drying unit air outlet connected to the compressed air demand, a precooler air outlet and a preheater air inlet. The main cooler of each drying unit comprises a main cooler air inlet and a main cooler air outlet with the main cooler air inlet being connected to the precooler air outlet of the respective precooler/preheater. The moisture separator of each drying unit comprises a moisture separator air inlet and a moisture separator air outlet with the moisture separator air inlet being connected to the main cooler air outlet of the respective main cooler. The preheater air inlet of the precooler/preheater of each drying unit is connected to the moisture separator air outlet of the respective moisture separator. All of the drying unit air inlets of the plurality of drying units are connected to the compressed air supply and all of the drying unit air outlets of the plurality of drying units are connected to the compressed air demand. A separate air valve is connected to each of the plurality of drying units and is disposed between the compressed air supply and compressed air demand to separately control air flow through each of the plurality of drying units.

In one embodiment the main cooler of each of the plurality of drying units may be a heat exchanger in communication with a refrigerant. Optionally each drying unit may further comprise a refrigerant compressor compressing gaseous refrigerant and a controller shutting off a power supply to the refrigerant compressor of one of the plurality drying units corresponding to a closed separate air valve. The refrigerant compressor may run at a continuous speed and load capacity when power is supplied thereto.

In a further embodiment the compressed air drying system may comprise an inlet air header with the inlet air header being connected to the compressed air supply and each of the drying unit air inlets of the plurality of drying units being connected to the inlet air header. Further each of the separate air valves is connected between the inlet air header and a respective one of the plurality of drying units.

According to one embodiment the compressed air drying system may further comprise a controller coupled to each of the separate air valves with the controller closing one or more of the separate air valves when the compressed air demand is below a threshold.

Optionally the controller may monitor an air pressure drop between the drying unit air inlet and the drying unit air outlet of at least one of the plurality of drying units and closes one or more of the separate air valves when the pressure drop is below a threshold.

Further optionally the main cooler may be a heat exchanger in communication with a refrigerant with the refrigerant flowing through a refrigerant compressor and a refrigerant condenser. The refrigerant also flows through a bypass connected at one end between the refrigerant compressor and the refrigerant condenser and at another end between the refrigerant condenser and the heat exchanger. A hot gas bypass valve may be disposed in the bypass and may be controlled by an outlet of the refrigerant condenser such that the valve opens and closes based on a pressure or temperature in the bypass and/or between the refrigerant condenser and the heat exchanger. The controller may monitor the pressure or temperature of at least one of the plurality of drying units and may close one or more of the separate air valves based on the pressure or temperature.

Further optionally the controller may monitor an air temperature between the main cooler air outlet and the preheater air inlet of at least one of the plurality of drying units and may open one or more of the separate air valves when the temperature is above a threshold.

Further optionally the controller may monitor (1) an air pressure of the drying unit air inlet, (2) an air pressure drop between the drying unit air inlet and the drying unit air outlet, (3) an air temperature of the drying unit air inlet, and (4) an air temperature between the main cooler air outlet and the preheater air inlet, of at least one of the plurality of drying units and may open or close one or more of the separate air valves based on a correlation thereof.

Further optionally the controller may shut off a power supply to individual ones of the plurality of drying units which correspond to the separate air valves that are closed.

Further optionally the compressed air drying system may additionally comprise a base drying unit arranged in parallel with the plurality of drying units between the compressed air supply and the compressed air demand and being connected to the compressed air supply with a base drying unit air inlet and being connected to the compressed air demand with a base drying unit air outlet. Compressed air may constantly flow through the base drying unit to provide compressed dry air to the compressed air demand without being shutoff by the controller. Optionally the base drying unit may comprise a heat exchanger in communication with a refrigerant and a base refrigerant compressor compressing gaseous refrigerant, the base refrigerant compressor being a variable speed compressor or a variable load capacity compressor.

In one embodiment the compressed air drying system may further comprise a controller coupled to each of the separate air valves, the controller closing one or more of the separate air valves when the compressed air demand is below a threshold. The main cooler of each of the plurality of drying units may be a heat exchanger in communication with a refrigerant. Optionally the compressed air drying system may further comprise an inlet air header, the inlet air header being connected to the compressed air supply and each of the drying unit air inlets of the plurality of drying units being connected to the inlet air header. Each of the separate air valves may be connected between the inlet air header and a respective one of the plurality of drying units.

Further optionally each drying unit may additionally comprise a refrigerant compressor compressing gaseous refrigerant and the controller may shut off a power supply to the refrigerant compressor of one of the plurality drying units corresponding to a closed separate air valve.

Further optionally the controller may monitor an air pressure drop between the drying unit air inlet and the drying unit air outlet of at least one of the plurality of drying units and may close one or more of the separate air valves when the pressure drop is below a threshold.

Further optionally the main cooler may be a heat exchanger in communication with a refrigerant, the refrigerant flowing through a refrigerant compressor and a refrigerant condenser. The refrigerant may also flow through a bypass connected at one end between the refrigerant compressor and the refrigerant condenser and at another end between the refrigerant condenser and the heat exchanger. A hot gas bypass valve may be disposed in the bypass and may be controlled by an outlet of the refrigerant condenser such that the valve opens and closes based on a pressure or temperature in the bypass and/or between the refrigerant condenser and the heat exchanger. The controller may monitor the pressure or temperature of at least one of the plurality of drying units and may close one or more of the separate air valves based on the pressure or temperature.

Further optionally the controller may monitor an air temperature between the main cooler air outlet and the preheater air inlet of at least one of the plurality of drying units and may open one or more of the separate air valves when the temperature is above a threshold.

Further optionally the compressed air drying system may additionally comprise a base drying unit arranged in parallel with the plurality of drying units between the compressed air supply and the compressed air demand and being connected to the compressed air supply with a base drying unit air inlet and being connected to the compressed air demand with a base drying unit air outlet. Compressed air may constantly flow through the base drying unit to provide compressed dry air to the compressed air demand without being shutoff by the controller. The refrigerant compressor of each of the plurality of drying units may run at a continuous speed and load capacity when power is supplied thereto and the base drying unit may comprise a heat exchanger in communication with a refrigerant and a base refrigerant compressor compressing gaseous refrigerant. The base refrigerant compressor may be a variable speed compressor or a variable load capacity compressor.

### BRIEF DESCRIPTION OF SEVERAL VIEWS OF THE DRAWINGS

The invention may be more fully understood by reading the following description in conjunction with the drawings, in which:
Figure 1 is a perspective view of an air drying system;
Figure 2 is a schematic of an air drying unit; and
Figure 3 is a schematic of the air drying system.

### DETAILED DESCRIPTION

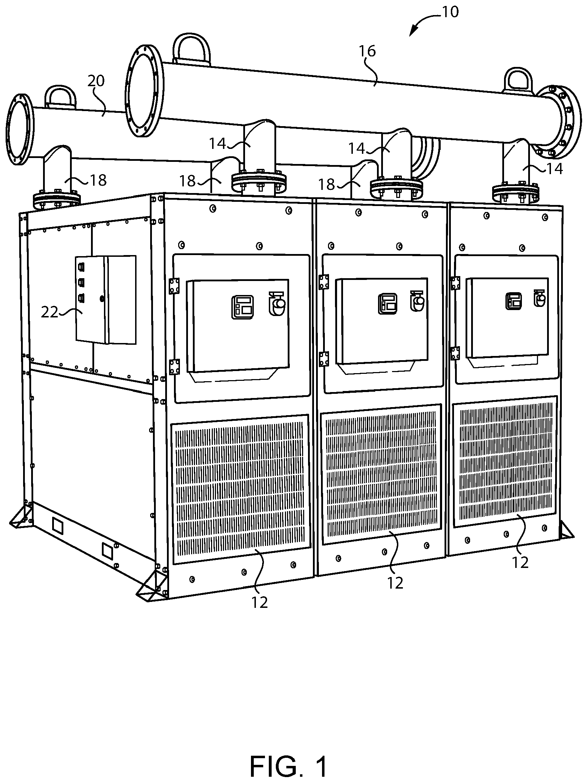

Referring now to the figures, and particularly Figure 1, an industrial air drying system 10 for an industrial factory is shown. The air drying system 10 is designed as a multi-unit system 10 that can be sized to the particular factory installation by adding additional units 12 as needed. Thus, in the air drying system 10 shown in Figure 1, the system 10 includes three air drying units 12. However, it is understood that the system 10 may also include two units 12, four units 12, five units 12 or more in order to accommodate the capacity requirements needed at the particular factory installation.

As shown, all of the air inlets 14 of the drying units 12 may be connected to a common inlet air header 16. The inlet air header 16 is typically a metal pipe with a larger passageway than the air inlets 14 of the individual drying units 12. The inlet air header 16 is connected to a compressed air supply which typically includes one or more air compressors that draw air from the surrounding atmosphere and compresses it to a pressure between 100-200 psi. Similarly, all of the air outlets 18 of the drying units 12 may be connected to a common outlet air header 20. The outlet air header 20 is also typically a metal pipe with a larger passageway than the air outlets 18 of the individual drying units 12. The outlet air header 20 is connected to a network of tools or stations in the factory that use the compressed air for a variety of uses. It is understood that the compressed air system 10 is also likely to have various compressed air storage tanks between the compressor(s) and the air drying system 10 and/or between the air drying system 10 and the tools and/or stations where the compressed air is used.

As also shown in Figure 1, the air drying system 10 may be provided with a control panel 22 which includes a controller 22 to control various functions of the air drying system 10, including the components described below. It is understood that separate controllers could be provided for each air drying unit 12 if desired or a common controller 22 can be provided for the entire system 10.

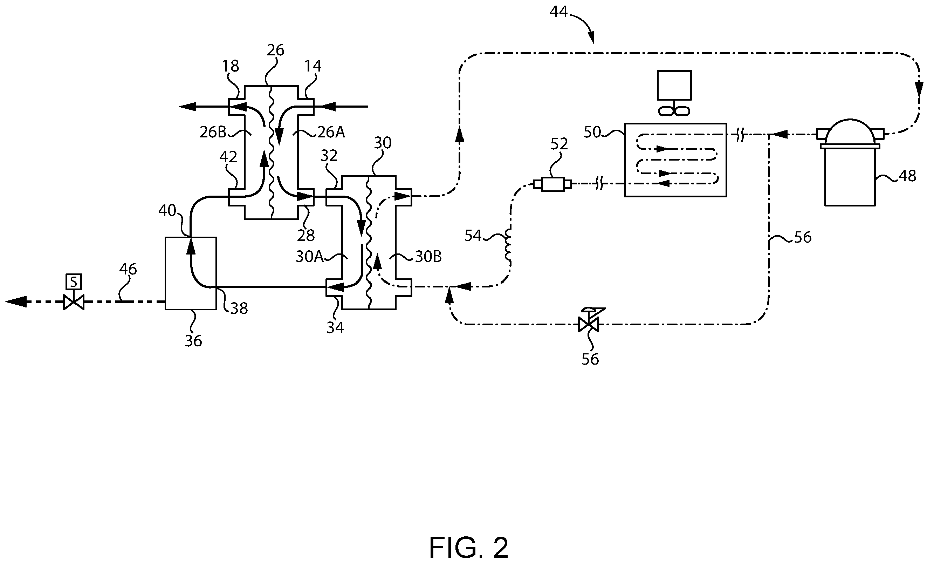

Turning to Figure 2, a schematic of one of the air drying units 12 is shown. It is understood that the air drying units 12 preferably have a common design such that the schematic of Figure 2 can be replicated for each of the drying units 12. It is advantageous for the drying units 12 to share a common design for manufacturing efficiency and for maintenance simplicity. As illustrated in Figure 1, the air drying units 12 are also arranged in parallel with each other between the compressed air supply and the compressed air demand. In other words, when multiple air drying units 12 are operating at the same time, the compressed air flow from the supply is split into portions that flow through separate drying units 12. The portions may then be recombined after flowing through the multiple drying units 12 to be supplied to the compressed air demand. Because the drying units 12 are arranged in parallel with each other, maintenance can be further simplified since one of the drying units 12 can be taken out of operation temporarily for repair while the remaining drying units 12 continue to operate.

Figure 2 illustrates the compressed air flow through an individual air drying unit 12 as well as a cooling system and moisture separation system. As shown, air from the drying unit air inlet 14 preferably enters the precooler side 26A of a precooler/preheater 26. The air then exits the precooler/preheater 26 through a precooler air outlet 28. Next, the air enters a main cooler 30 through a main cooler air inlet 32 and exits the main cooler 30 through a main cooler air outlet 34. The air then enters a moisture separator 36 through a moisture separator air inlet 38 and exits the moisture separator 36 through a moisture separator air outlet 40. The air then reenters the precooler/preheater 26 on the preheater side 26B through a preheater air inlet 42. Finally, the air exits the precooler/preheater 26 through the drying unit air outlet 18.

The precooler/preheater 26 is a heat exchanger 26 that exchanges heat between the incoming air flow and the outgoing airflow. That is, the incoming air flow is warm relative to the outgoing airflow. As described below, the air is cooled within the drying unit 12 to withdraw moisture from the air. Thus, the precooler/preheater 26 increases efficiency by cooling the incoming air with the outgoing air prior to additional cooling that occurs thereafter. Also, it is undesirable for the outgoing air to be too cool since this would cool the compressed air piping and cause condensation of water vapor on the exterior of the piping. Thus, the precooler/preheater 26 prevents this from happening by heating the outgoing air using the warm incoming air.

The main cooler 30 is another heat exchanger 30 that performs the primary cooling of the compressed air. As described further below, the main cooler 30 may use a refrigerant cooling system 44 to cool the compressed air. After the compressed air has been cooled by the main cooler 30 (e.g., to below 40°F), the moisture separator 36 withdraws moisture from the compressed air. The withdrawn moisture is then removed through a drain 46. Thus, the compressed air entering the preheater side 26B of the precooler/preheater 26 and exiting the drying unit 12 has been dried by removing water vapor from the compressed air. It is understood that airflow through the air drying unit 12 need not be separately forced or circulated therethrough, but instead may flow through the drying unit 12 as air is used by the compressed air demand and replaced by the compressed air supply. That is, any compressed air that flows to the compressed air demand from the compressed air supply must first pass through one of the drying units 12 due to the location of the drying units 12 between the supply and demand.

Preferably, the main cooler 30 is cooled with a refrigerant based cooling system 44. Thus, the refrigerant side 30B of the main cooler 30 may be considered to be an evaporator 48 where the refrigerant evaporates and absorbs heat from the compressed air side 30A of the main cooler 30. The refrigerant vapor is then compressed to a higher pressure (and higher temperature) by a refrigerant compressor 48. The refrigerant then passes through a refrigerant condenser 50 that cools and liquefies the refrigerant. A filter/dryer 52 may be provided thereafter to clean the refrigerant. An expansion valve 54, such as a capillary tube 54, then converts the refrigerant back into a vapor for reentry into the refrigerant side 30B of the main cooler 30. The refrigerant system 44 may also have a bypass 56 that stabilizes the load on the refrigerant system 44. That is, one end of the bypass 56 is connected between the refrigerant compressor 48 and the refrigerant condenser 50, and the other end of the bypass 56 is connected between the refrigerant condenser 50 and the main cooler 30. A hot gas bypass valve 58 is also provided in the bypass 56 to control the amount of refrigerant that flows through the bypass 56. Opening and closing of the hot gas bypass valve 58 is controlled by a sensor reading at the outlet of the refrigerant condenser 50 and/or in the bypass 56 that senses temperature and/or pressure at the refrigerant compressor 50 outlet, in the bypass 56 or between the refrigerant condenser 50 outlet and the bypass 56.

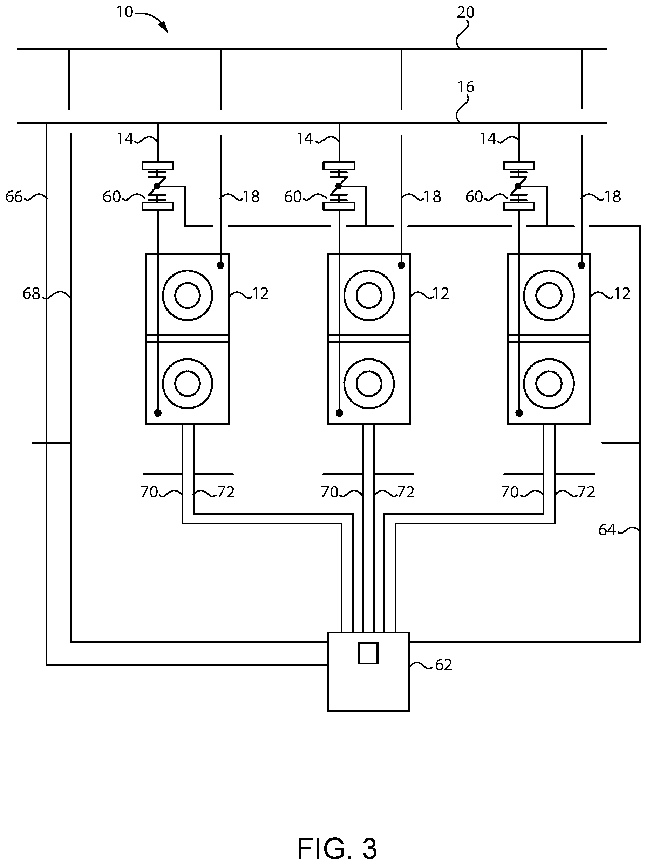

As shown in Figure 3, each of the drying units 12 may also be provided with a separate air valve 60 to control the flow of compressed air through the individual drying units 12. Each of the air valves 60 is arranged between the compressed air supply and the compressed air demand such that the air valve 60 can be used to separately control the airflow through one of the drying units 12. As illustrated in Figure 3, it may be preferred for the separate air valves 60 to be located in the air inlet 14 of each drying unit 12 between the inlet air header 16 and the precooler/preheater 26 (i.e., the first functioning component of the drying unit 12). However, it is also possible for the air valve 60 to be located within the drying unit 12 or in the air outlets 18 so long as the air valve 60 provides independent control of airflow through an individual drying unit 12 by being able to restrict, including closing off, and allowing airflow through the respective drying unit 12.

The separate air valves 60 may be used to stop airflow through particular drying units 12 when the compressed air demand is low. For example, when a factory is running at a low capacity and only a few pneumatic tools or air blowing stations are being used, it may not be necessary to run compressed air through all of the drying units 12 to provide a sufficient quantity of dry air to the compressed air demand. In these cases, it can be costly to operate all of the drying units 12 at the same time when a smaller number of drying units 12 could satisfy the demand.

Thus, it may be desirable to have a controller 62 that monitors or receives data representing the level of compressed air demand. The controller 62 may then close one or more of the separate air valves 60 to stop airflow through one or more drying units 12 to reduce the cost of operating extra drying units 12 while still satisfying the demand for compressed air. Therefore, as shown in Figure 3, the controller 62 is coupled to each of the separate air valves 60 with a control line 64 to send control signals that can open and close the air valves 60 in response to the compressed air demand.

One way in which the controller 62 can determine the level of compressed air demand is to monitor the difference in air pressure between the air inlet 14, or inlet header 16, with a first monitoring line 66 and the air outlet 18, or outlet header 20, with a second monitoring line 68 of one or more of the drying units 12 while the respective air valve 60 is open and the drying unit 12 is operating. When the compressed air demand is high (i.e., a lot of pneumatic tools being used or a lot of air being blown), the air pressure drop between the air inlet 14 and the air outlet 18 will be higher. That is, there will be a larger pressure difference between the air inlet 14 and the air outlet 18 when demand is high than when demand is low. Thus, the controller 62 may use the pressure drop to determine when to close one of the valves 60, and therefore, limit operation of one or more of the drying units 12.

Another alternative is to monitor the pressure or temperature in the hot gas bypass valve 58 and/or between the refrigerant condenser 50 and the main cooler 30 with a third monitoring line 70 as described above. Since there is a change in the amount of hot gas that flows through the hot gas bypass valve 58 and/or the positioning of the valve 58 changes in response to the amount of cooling required, which is related to the amount of compressed air flow through the drying unit 12, this may also be used as a sensing signal to determine the amount of air demand in order to control opening and closing of the separate air valves 60.

Output temperature of the compressed air after the main cooler 30 between the main cooler air outlet 34 and the preheater air inlet 42 may also be used to determine the level of compressed air demand with a fourth monitoring line 72. In this case, when the demand is higher than what the drying units 12 can sufficiently satisfy, the temperature at the main cooler air outlet 34 will rise, meaning that the refrigerant cooling system 44 cannot keep up with the demand. In this case, the controller 62 can open one or more of the separate air valves 60 for other drying units 12 not currently operating in order to increase the total drying system 10 capacity. It is understood that other inputs may also be used to determine the level of compressed air demand, such as sensors that monitor the load of the air compressors that provide the compressed air supply.

It is understood that it may be desirable for the controller 62 to monitor multiple parameters at the same time and correlate parameters in order to determine when to close and open the valves 60. For example, during actual use of the air drying system 10, individual parameters could vary because of other dynamic system factors besides the level of compressed air demand. Thus, it may be preferable to combine multiple parameters to determine when to close and open the valves 60. As an example, in one preferred embodiment, the controller monitors (1) the air pressure at the air inlet 14, or inlet header 16; (2) the air pressure drop between the air inlet 14, or inlet header 16, and the air outlet 18, or outlet header 20; (3) the air temperature at the air inlet 14, or inlet header 16; and (4) the air temperature between the main cooler air outlet 34 and the preheater air inlet 42.

It may also be desirable to shut off the power supply to drying units 12 that are not needed in order to save costs. For example, the refrigerant compressor 48 uses a significant amount of power when operating. This is particularly the case with many refrigerant compressors 48 that run at a continuous speed and load capacity. Thus, it may be desirable for the controller 62 to shut off power to the refrigerant compressor 48 when the separate air valve 60 of the respective drying unit 12 has been closed. It may also be desirable to shut off all power to a respective drying unit 12 with a closed air valve 60 (except any necessary controllers) in order to stop all cooling and drying functions of the drying unit 12.

Although the drying units 12 have been described above as being modular units 12 with matching designs and capabilities, it may be desirable to provide one drying unit 12 that is a base drying unit 12 that runs at all times to ensure that a minimum drying capacity is provided even when the compressed air demand is low. In this arrangement, the base drying unit 12 may be arranged in parallel with the remaining drying units 12 and may be considered to be one of the drying units 12 described above and having a similar type of air inlet 14 and air outlet 18. However, unlike the drying units 12 that have separate air valves 60 that may be closed depending on the compressed air demand, the base drying unit 12 need not have a separate air valve 60 and is not shut off by the controller 62 in response to the level of compressed air demand. Although the base drying unit 12 may have the same components described above for handling the compressed air flow therethrough and cooling the compressed air flow, it may be desirable to use a different refrigerant compressor 48 in the base drying unit 12 than in the other drying units 12. As described above, the drying units 12 typically use a continuous speed and load capacity compressor 48. Such compressors 48 are readily available and have a moderate price. However, since the base drying unit 12 may be designed to operate regardless of demand, it may be preferable to use a more expensive refrigerant compressor 48 in the base drying unit 12 that has a variable speed or variable load capacity. Thus, the base drying unit 12 may be able to achieve cost savings even when operating most of the time regardless of demand. And as described above, the remaining drying units 12 may be able to achieve even greater savings by only operating when needed.

While preferred embodiments of the inventions have been described, it should be understood that the inventions are not so limited, and modifications may be made without departing from the inventions herein. While each embodiment described herein may refer only to certain features and may not specifically refer to every feature described with respect to other embodiments, it should be recognized that the features described herein are interchangeable unless described otherwise, even where no reference is made to a specific feature. It should also be understood that the advantages described above are not necessarily the only advantages of the inventions, and it is not necessarily expected that all of the described advantages will be achieved with every embodiment of the inventions. The scope of the inventions is defined by the appended claims, and all devices and methods that come within the meaning of the claims, either literally or by equivalence, are intended to be embraced therein.

## Claims

1. A compressed air drying system, comprising:
a compressed air supply and a compressed air demand;
a plurality of drying units arranged in parallel between the compressed air supply and the compressed air demand,
each of the plurality of drying units comprising a precooler/preheater, a main cooler and a moisture separator;
the precooler/preheater of each drying unit comprising a drying unit air inlet connected to the compressed air supply, a drying unit air outlet connected to the compressed air demand, a precooler air outlet and a preheater air inlet;
the main cooler of each drying unit comprising a main cooler air inlet and a main cooler air outlet, the main cooler air inlet being connected to the precooler air outlet of the respective precooler/preheater;
the moisture separator of each drying unit comprising a moisture separator air inlet and a moisture separator air outlet, the moisture separator air inlet being connected to the main cooler air outlet of the respective main cooler;
the preheater air inlet of the precooler/preheater of each drying unit being connected to the moisture separator air outlet of the respective moisture separator;
all of the drying unit air inlets of the plurality of drying units being connected to the compressed air supply and all of the drying unit air outlets of the plurality of drying units being connected to the compressed air demand;
and a separate air valve being connected to each of the plurality of drying units and being disposed between the compressed air supply and compressed air demand to separately control air flow through each of the plurality of drying units.

2. The compressed air drying system according to claim 1, wherein the main cooler of each of the plurality of drying units is a heat exchanger in communication with a refrigerant,
wherein optionally each drying unit further comprises a refrigerant compressor compressing gaseous refrigerant, and further comprising a controller shutting off a power supply to the refrigerant compressor of one of the plurality drying units corresponding to a closed separate air valve and
wherein further optionally the refrigerant compressor runs at a continuous speed and load capacity when power is supplied thereto.

3. The compressed air drying system according to claim 1 or claim 2,
further comprising an inlet air header, the inlet air header being connected to the compressed air supply and each of the drying unit air inlets of the plurality of drying units being connected to the inlet air header, each of the separate air valves being connected between the inlet air header and a respective one of the plurality of drying units.

4. The compressed air drying system according to one of claims 1 to 3,
further comprising a controller coupled to each of the separate air valves, the controller closing one or more of the separate air valves when the compressed air demand is below a threshold.

5. The compressed air drying system according to claim 4,
wherein the controller monitors an air pressure drop between the drying unit air inlet and the drying unit air outlet of at least one of the plurality of drying units, and closes one or more of the separate air valves when the pressure drop is below a threshold.

6. The compressed air drying system according to claim 4,
wherein the main cooler is a heat exchanger in communication with a refrigerant, the refrigerant flowing through a refrigerant compressor and a refrigerant condenser, the refrigerant also flowing through a bypass connected at one end between the refrigerant compressor and the refrigerant condenser and at another end between the refrigerant condenser and the heat exchanger, a hot gas bypass valve being disposed in the bypass and being controlled by an outlet of the refrigerant condenser such that the valve opens and closes based on a pressure or temperature in the bypass and/or between the refrigerant condenser and the heat exchanger, the controller monitoring the pressure or temperature of at least one of the plurality of drying units and closes one or more of the separate air valves based on the pressure or temperature.

7. The compressed air drying system according to claim 4,
wherein the controller monitors an air temperature between the main cooler air outlet and the preheater air inlet of at least one of the plurality of drying units, and opens one or more of the separate air valves when the temperature is above a threshold.

8. The compressed air drying system according to claim 4,
wherein the controller monitors (1) an air pressure of the drying unit air inlet, (2) an air pressure drop between the drying unit air inlet and the drying unit air outlet, (3) an air temperature of the drying unit air inlet, and (4) an air temperature between the main cooler air outlet and the preheater air inlet, of at least one of the plurality of drying units, and opens or closes one or more of the separate air valves based on a correlation thereof.

9. The compressed air drying system according to claim 4,
wherein the controller shuts off a power supply to individual ones of the plurality of drying units which correspond to the separate air valves that are closed.

10. The compressed air drying system according to claim 4,
further comprising a base drying unit arranged in parallel with the plurality of drying units between the compressed air supply and the compressed air demand and being connected to the compressed air supply with a base drying unit air inlet and being connected to the compressed air demand with a base drying unit air outlet, compressed air constantly flowing through the base drying unit to provide compressed dry air to the compressed air demand without being shutoff by the controller,
wherein optionally the base drying unit comprises a heat exchanger in communication with a refrigerant and a base refrigerant compressor compressing gaseous refrigerant, the base refrigerant compressor being a variable speed compressor or a variable load capacity compressor.

11. The compressed air drying system according to claim 1,
further comprising a controller coupled to each of the separate air valves, the controller closing one or more of the separate air valves when the compressed air demand is below a threshold, wherein the main cooler of each of the plurality of drying units is a heat exchanger in communication with a refrigerant,
wherein optionally the compressed air drying system further comprises an inlet air header, the inlet air header being connected to the compressed air supply and each of the drying unit air inlets of the plurality of drying units being connected to the inlet air header, each of the separate air valves being connected between the inlet air header and a respective one of the plurality of drying units.

12. The compressed air drying system according to claim 11,
wherein each drying unit further comprises a refrigerant compressor compressing gaseous refrigerant, and the controller shutting off a power supply to the refrigerant compressor of one of the plurality drying units corresponding to a closed separate air valve.

13. The compressed air drying system according to claim 12,
wherein the controller monitors an air pressure drop between the drying unit air inlet and the drying unit air outlet of at least one of the plurality of drying units, and closes one or more of the separate air valves when the pressure drop is below a threshold, or
wherein the controller monitors an air temperature between the main cooler air outlet and the preheater air inlet of at least one of the plurality of drying units, and opens one or more of the separate air valves when the temperature is above a threshold.

14. The compressed air drying system according to claim 12,
wherein the main cooler is a heat exchanger in communication with a refrigerant, the refrigerant flowing through a refrigerant compressor and a refrigerant condenser, the refrigerant also flowing through a bypass connected at one end between the refrigerant compressor and the refrigerant condenser and at another end between the refrigerant condenser and the heat exchanger, a hot gas bypass valve being disposed in the bypass and being controlled by an outlet of the refrigerant condenser such that the valve opens and closes based on a pressure or temperature in the bypass and/or between the refrigerant condenser and the heat exchanger, the controller monitoring the pressure or temperature of at least one of the plurality of drying units and closes one or more of the separate air valves based on the pressure or temperature.

15. The compressed air drying system according to claim 12,
further comprising a base drying unit arranged in parallel with the plurality of drying units between the compressed air supply and the compressed air demand and being connected to the compressed air supply with a base drying unit air inlet and being connected to the compressed air demand with a base drying unit air outlet, compressed air constantly flowing through the base drying unit to provide compressed dry air to the compressed air demand without being shutoff by the controller, the refrigerant compressor of each of the plurality of drying units runs at a continuous speed and load capacity when power is supplied thereto, and the base drying unit comprises a heat exchanger in communication with a refrigerant and a base refrigerant compressor compressing gaseous refrigerant, the base refrigerant compressor being a variable speed compressor or a variable load capacity compressor.
